(19) Europäisches Patentamt

European Patent Office

Office européen des brevets

(11) **EP 3 591 955 B1**

(12) **EUROPEAN PATENT SPECIFICATION**

(45) Date of publication and mention
of the grant of the patent:
**01.10.2025 Bulletin 2025/40**

(21) Application number: **18305894.0**

(22) Date of filing: **06.07.2018**

(51) International Patent Classification (IPC):
**H04N 1/60** (2006.01) **G09G 5/06** (2006.01)

(52) Cooperative Patent Classification (CPC):
**H04N 1/6025; G09G 5/06; H04N 1/6019;**
G09G 2320/0673; G09G 2340/06; H04N 1/6027;
H04N 1/6058

(54) **METHOD OF PROCESSING DATA BY AN ITERATIVE APPLICATION OF A SAME LUT**

VERFAHREN ZUR VERARBEITUNG VON DATEN DURCH ITERATIVE ANWENDUNG DER
GLEICHEN LUT

PROCÉDÉ DE TRAITEMENT DE DONNÉES PAR UNE APPLICATION ITÉRATIVE D'UNE MÊME
LUT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.01.2020 Bulletin 2020/02**

(73) Proprietor: **InterDigital Madison Patent Holdings,
SAS**
**75017 Paris (FR)**

(72) Inventors:
• **REINHARD, Erik**
**35576 CESSON-SÉVIGNÉ (FR)**
• **GARCES, Elena**
**35576 CESSON-SÉVIGNÉ (FR)**

• **STAUDER, Jurgen**
**35576 CESSON-SÉVIGNÉ (FR)**

(74) Representative: **AWA Sweden AB**
**Box 5117**
**200 71 Malmö (SE)**

(56) References cited:
**US-A1- 2012 188 229**

• **SHADROKH SAMAVI ET AL: "Reduction of Look
Up Tables for Computation of Reciprocal of
Square Roots", 12 October 2017 (2017-10-12),
XP055521052, Retrieved from the Internet
<URL:https://arxiv.org/ftp/arxiv/papers/1710/
1710.04688.pdf> [retrieved on 20181116]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

Technical Field

The present disclosure relates to the processing of data using lookup tables. It is mainly focuses on the processing of colors of images.

Background Art

It is known to process data according to a processing function. For instance, the so-called Perceptual Quantizer Electro-Optical Transfer Function (PQ-EOTF) $L = h(N)$ is, according to SMPTE ST-2084 standard, represented by the following function:

$$L = \left( \frac{N^{1/m_2} - c_1}{c_2 - c_3 N^{1/m_2}} \right)^{1/m_1}$$

$$m_1 = \frac{2610}{4096} \times \frac{1}{4} = 0.1593017578125$$

$$m_2 = \frac{2523}{4096} \times 128 = 78.84375$$

$$c_1 = \frac{3424}{4096} = 0.8359375$$

$$c_2 = \frac{2413}{4096} \times 32 = 18.8515625$$

$$c_3 = \frac{2392}{4096} \times 32 = 18.6875$$

where L is the Luminance and N is a non-linear color value .

Instead of using an algebraic function $h(.)$ to process data, it is common and efficient to use a Lookup-table (LUT) that models such a function to process these data. Such a processing method is quite usual notably in the field of color and image processing. LUTs are typically used when evaluation of a processing function is difficult to implement (for instance because it involves expensive operations such as divisions, logarithms and the like). Look-up tables are commonly used to represent complex processing functions, or processing functions that would otherwise be difficult to implement in hardware. Replacing a processing function with a look-up table involves approximating the function with a number of bins. Each bin of such a LUT maps a sample input value to a sample output value. An input/output value is meant to be a scalar value, or a vector of several scalar values. If values are scalar, the LUT is said to be one-dimensional, if values are vectors, the LUT is said to be multi-dimensional.

An input value different from the sample input values of a LUT is generally mapped to an output value interpolated from the sample output values of this LUT and this means that a table-lookup is always an approximation of the function that it represents.

Globally, it means that the processing of input values by a function is replaced by two operations: 1/ application of a LUT - 2/ application of interpolation between output values of this LUT.

When the processing function represented by the LUT is nonlinear, the interpolation can be improved upon by means of non-linear interpolation. Another way to reduce the error made by this interpolation is to increase the number of bins of the LUT. Yet another method for reducing the error is to creates bins of varying size. For example, in intervals of input values in which the function has a high curvature, the bin density of the LUT may be higher. In summary, methods to make LUTs more accurate include increasing the number of elements (bins) in the LUT, applying linear or higher order interpolation, or having a variable spacing between the bins.

It should be noted that each of these well-known methods to decrease the error made by replacing a function by a LUT (+ interpolation) increases the computation time, as well as the complexity of the hardware. As a consequence, it is desirable to use LUTs with regularly sized bins and linear interpolation, even if a larger size of LUT, i.e. a high number of bins, is needed to achieve a given level of precision.

US2012188229A1 is one relevant background art disclosing alternative methods for approximating the inverse transfer function of a display device using two different small-size LUTs applied in series or in parallel.

Summary of invention

The invention is defined by the appended claims.

An object of the invention is to find a more efficient way of modeling a processing function by the application of a LUT which is different from the well-known procedure where a single LUT is applied once to input values of color image data to process.

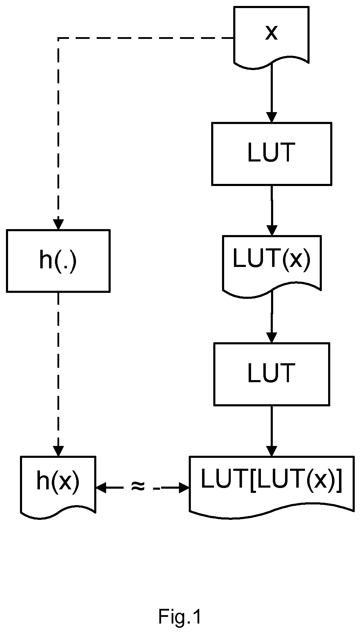

In the new processing method, a single, specific LUT is applied multiple times in succession, as illustrated in figure 1 for two times. The benefit is that for the same total number of bins, a repeated application of a single, specific, smaller LUT yields a combined error that is smaller than the error produced by a single application of a larger LUT according to the well-known procedure. Repeated application of a small LUT also has advantages in terms of hardware design over other techniques such as non-linear interpolation and uneven bin spacings, in that a very simple LUT design is repeated a number of times.

Brief description of drawings

The invention will be more clearly understood on reading the description which follows, given by way of non-limiting examples and with reference to the appended figures in which:

- Figure 1 illustrates the representation of a processing function h(.) by an iterative application of a LUT over two iterations.
- Figure 2 illustrates the representation of a processing function $h(x)$ by an iterative application of an iterative function $f(x)$ over two iterations.
- Figure 3 illustrates a comparison between approximating a PQ EOTF processing function using a single application of a 5-bin LUT, or using a single application of a 10-bin LUT, or using a double application of a 5-bin LUT as in the method of figure 1.
- Figure 4 illustrates errors of the approximations of figure 3.
- Figure 5 illustrates that, by incorporating a small k-bin LUT"$_p$"$_p$" into an iterative function $f_p(x)$, the polynomial $P_f(x)$ approximating this iterative function $f_p(x)$ is not accurate.
- Figure 6 illustrates a comparison between approximating a Slog3 EOTF processing function using a single application of a 5-bin LUT, or using a single application of a 15-bin LUT, or using a triple application of a 5-bin LUT as in the iterative method disclosed herein.
- Figure 7 illustrates errors of the approximations of figure 6.

Description of embodiments

It will be appreciated by those skilled in the art that flow charts presented herein represent conceptual views of illustrative circuitry embodying the invention. They may be substantially represented in **computer readable media** and so executed by a computer or processor, whether or not such computer or processor is explicitly shown.

The functions of the various elements shown in the figures may be provided through the use of dedicated hardware as well as hardware capable of executing software in association with appropriate software. Explicit use of the term processor should not be construed to refer exclusively to hardware capable of executing software, and may implicitly include, without limitation, digital signal processor ("DSP") hardware, Systems on Chip (SOCs) hardware or Field-Programmable Gate Arrays (FPGAs) hardware, read-only memory ("ROM") for storing software, random access memory ("RAM"), and non-volatile storage.

It is to be understood that the method of processing input values of data may be implemented in various forms of hardware, software, firmware, special purpose processors, or combinations thereof. The invention may be notably implemented as a combination of hardware and software. Moreover, the software may be implemented as an application program tangibly embodied on a program storage unit. The application program may be uploaded to, and executed by, a processing machine comprising any suitable architecture. Preferably, the processing machine is implemented on a platform having hardware such as one or more central processing units ("CPU"), a random access memory ("RAM"), and input/output ("I/O") interfaces. The platform may also include an operating system and microinstruction code. The various processes and functions described herein may be either part of the microinstruction code or part of the application program, or any combination thereof, which may be executed by a CPU. In addition, various other peripheral units may be connected to the platform such as an additional data storage unit and a display device. The platform may be notably a mobile device as a tablet, a communication device as a smartphone, a game device, a laptop, a camera, a chip as an encoding chip or a decoding chip, a server as a broadcast server or web server, a TV set or a Set-Top Box.

It is to be understood that input values of data to be processed by the method can be any kind of data, even if the below embodiment is described in the context of processing input values of color data.

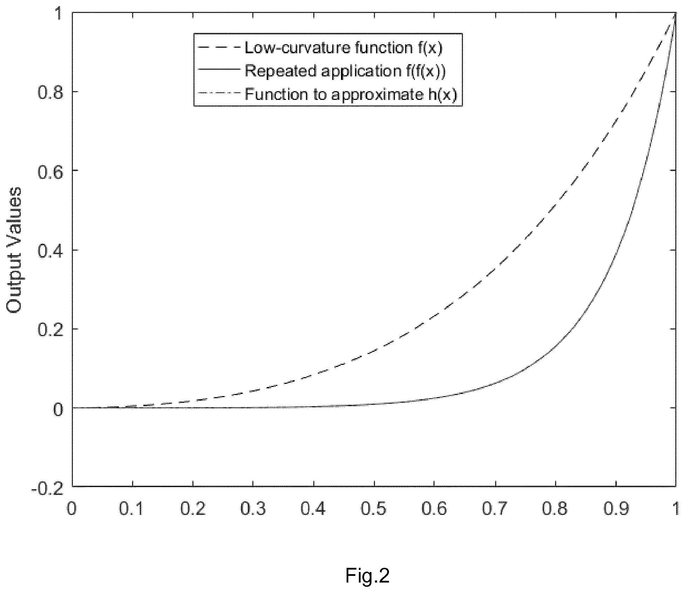

In a **first part of this embodiment,** an approximation of a processing function $h(x)$ by applying iteratively at least two times an iterative function $f(x)$, i.e. according $(f° ... °f° ... °f)(x)$ is explained. Then, the obtained result is extended to replace the iterative function $f(x)$ with the application of a corresponding iterative LUT resulting to an approximative iterative function $f'(x)$. Figure 1 illustrates the representation of a processing function h(.) by an iterative application of a LUT over two iterations. Similarly, figure 2 illustrates the representation of a processing function $h(x)$ by an iterative application of an iterative function $f(x)$ over two iterations ("repeated application f(f(x))"). Figure 2 shows that the iterative function $f(x)$ has a lower curvature compared to that of the processing function $h(x)$. The method of representing a processing function $h(x)$ by an iterative application of an LUT or of a function $f(x)$ can also be used similarly over more than two iterations.

A method to obtain a lookup table LUT to be applied iteratively over two iterations will be first described, in the context of processing color data x through a PQ electro-optical transfer function $h_{PQ}(x)$ as specified in ITU-R Recommendation BT2100. The variable $x$ corresponds to the variable N in the PQ-EOTF quoted in the background art paragraph above.

First, a number $k$ of bins is determined, based notably on memory size available on the processing platform. These $k$ input values $x_1, ..., x_j, ...., x_k$ are chosen to be distributed uniformly over the range of input values. Therefore, the targeted iterative LUT will have $k$ input values $x_1, ..., x_j, ...., x_k$ (and k corresponding output values $y_1, ..., y_j, ...., y_k$).

Then, an iterative function $f_{PQ}(x)$ is defined such that:

$$h_{PQ}(x) = f_{PQ}(f_{PQ}(x))$$

Such an iterative function $f_{PQ}(x)$ can be for instance approximated in a manner known per se by a 6-degree polynomial $P_{f_{PQ}}(x)$ as follows:

$$P_{f_{PQ}}(x) = -4.0793e^{-5}x^5 + 0.0116x^4 + 0.2966x^3 + 0.4146x^2 + 0.1455x + 0.1317$$

Note that, on a sampled grid of 1000 input values x, the mean absolute error of $|h_{PQ}(x)-f_{PQ}(f_{PQ}(x))|$ is $1.95e^{-5}$, showing a high degree of correspondence between a double iteration $f_{PQ}(f_{PQ}(x))$ of the iterative function and the processing function itself $h_{PQ}(x)$. Similarly, the HLG opto-electrical transfer function (ITU-R Recommendation BT.2100) can be approximated with this procedure to within a mean absolute error of $9.01\ e^{-4}$.

Generally, for any processing function $h(x)$, the iterative function $f(x)$ cannot be obtained analytically. However, it is generally possible to approximate the iterative function $f(x)$ using a polynomial $P_f(x)$ of a sufficiently high degree:

$$P_f(x) = \sum_{i=0}^{n} m_i x^{n-i}$$

where the polynomial $P_f(x)$ is defined by the degree $n$ and the coefficients $m_i$. The coefficients of the polynomial $P_f(x)$ can be determined by the equation:

$$\underset{m_i}{\text{argmin}} \left\| h(x) - P_f(P_f(x)) \right\|_2^2$$

Here, an iterative polynomial $P'_f(x)$ is preferably evaluated based <u>only</u> on the k input values $x_1, ..., x_j, ...., x_k$ and their corresponding processing function values $f(x_1), ... , f(x_j), ... , f(x_k)$. The $k$ resulting values $P'_f(x_1), ... , P'_f(x_j), ... , P'_f(x_k)$

output by this iterative polynomial $P'_f(.)$ then serve once more as input to this iterative polynomial $P'_f(x)$. The resulting coarsely k-discretized $P'_f(P'_f(x_j))$ (with j in [1,k]) is then turned in a manner known per se into a LUT'$_{p'p'}$ representing $P'_f(P'_f(x_j))$ and having the $k$ input values $x_1$, ..., $x_j$, ...., $x_k$ as entries. This LUT'$_{p'p'}$, which represents a function $f'_{p'p'}(x)$, can be evaluated (by means of linear interpolation) at a large number i of sample points between $x \in [0,1]$. Thus, for a large number of points, say 1000, the following iterative function is evaluated:

$$\operatorname*{argmin}_{m_i}\left\|h(x) - f'_{pp}(x)\right\|_2^2$$

After minimizing the difference $\left\|h(x) - f'_{p'p'}(x)\right\|_2^2$ for this large number $i$ of sample points $m_i$, another resulting polynomial $P''_{p'p}(.)$ with coefficients $m_i$ is once again evaluated as above at the same k sample points. This other resulting polynomial $P''_{p'p}(x)$ is then turned into a final target iterative LUT"$_{p''p''}$ in a manner known per se.

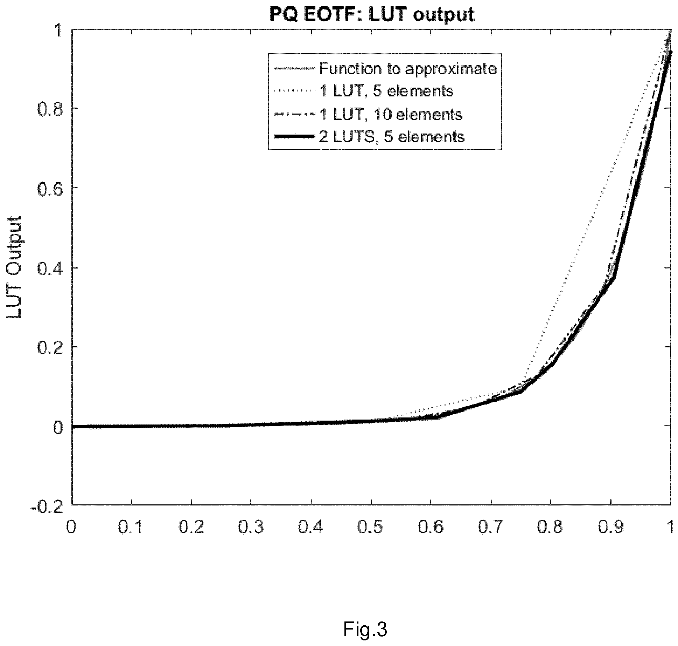

As an example, this procedure is applied to the above PQ EOTF using a 6-degree polynomial, and a 5-bin target LUT, with results shown in figure 3. This figure illustrates a comparison between approximating the processing function ("function to approximate") using a single application of a 5-bin LUT, or using a single application of a 10-bin LUT, or using a double application of a 5-bin LUT as in the above method. This figure shows that the modeling of the processing function by a double application of a 5-bin LUT is as accurate as the modeling of the processing function by a single application of a 10-bin LUT.

The advantage of approximating a function of input values of data by applying iteratively a small size LUT to these input values will now be shown in comparison with approximating the function of input values of data by applying once a bigger LUT to these input values.

When comparing the above situation of a two-iterative 5-bin LUT"$_{p''p''}$ approximating the PQ EOTF with a situation of a single 10-bit LUT approximating the PQ EOTF, the mean absolute error induced by the double application of the small LUT"$_{p''p''}$ is 0.0046, whereas a single application of a 10-bin bigger LUT induces a higher mean absolute error of 0.0096. The double application of the small LUT"$_{p''p''}$ is therefore a better approximation of the PQ EOTF that a single application of the 10-bin bigger LUT.

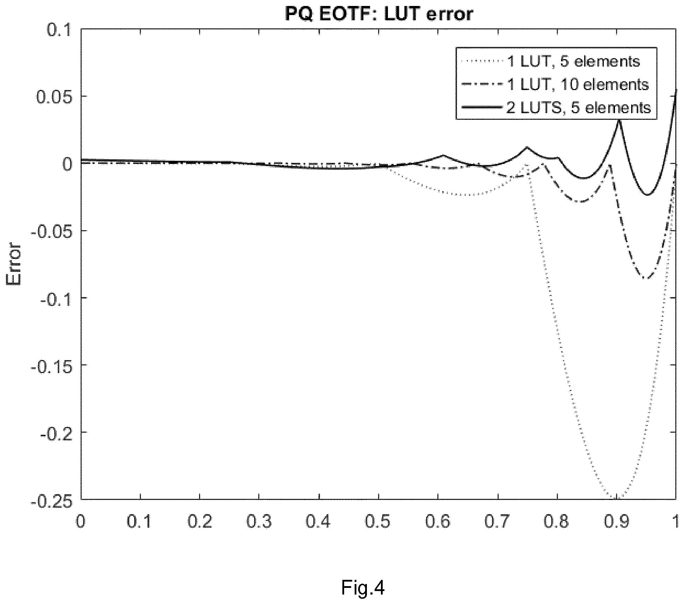

The distribution shown in figure 4 of the absolute errors over the input range of input values shows that the error made by applying two times the smaller LUT"$_{p''p''}$ is the smallest over the full range of input values. It can also be seen that the error of this iterative method can be both positive and negative, so that the maximum error is small. Comparatively, as shown in figure 4, conventional single application of a LUT leads to errors that are always positive or always negative.

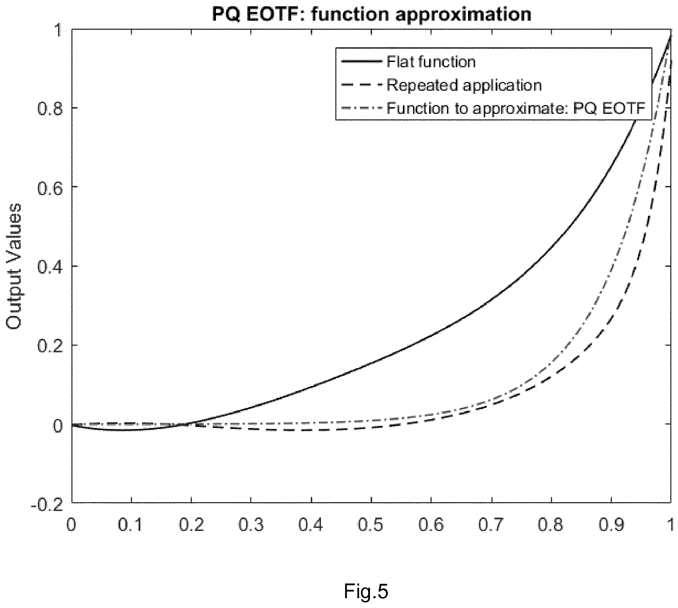

Finally, note that by incorporating a small $k$-bin LUT"$_{p''p''}$ into the iterative function $f_p(x)$, the approximating polynomial $P_f(x)$ is no longer accurate, as shown in figure 5. This demonstrates the interest of evaluating an iterative polynomial based not on a sampled grid of a large number of input values (for instance 1000 as described above), but based only on $k$ input values $x_1$, ..., $x_j$, ...., $x_k$ distributed over the range of input values, where $k$ is the number of bin of the targeted iterative LUT .

Still in the first part of this embodiment, a method to obtain a lookup table LUT to apply iteratively over more than two iterations will be described.

To approximate a function $h(x)$ with $n$ repeated applications of an iterative function $f(x)$, the iterative function $f_p(x)$ is given by:

$$\operatorname*{argmin}_{m_i}\left\|h(x) - \left(f_p \circ f_p \circ ... \circ f_p\right)(x)\right\|_2^2$$

To approximate a function $h(x)$ with an iterative LUT applied over $n$ iterations, the iterative function $f_p(x)$ is given by:

$$\operatorname*{argmin}_{m_i}\left\|h(x) - f'_{pp...p}(x)\right\|_2^2$$

where $f'_{pp...p}(x)$ is a small LUT created by repeating the evaluation of polynomial $f_p(x)$ using a LUT of $k$ bins for a total of $n$ times.

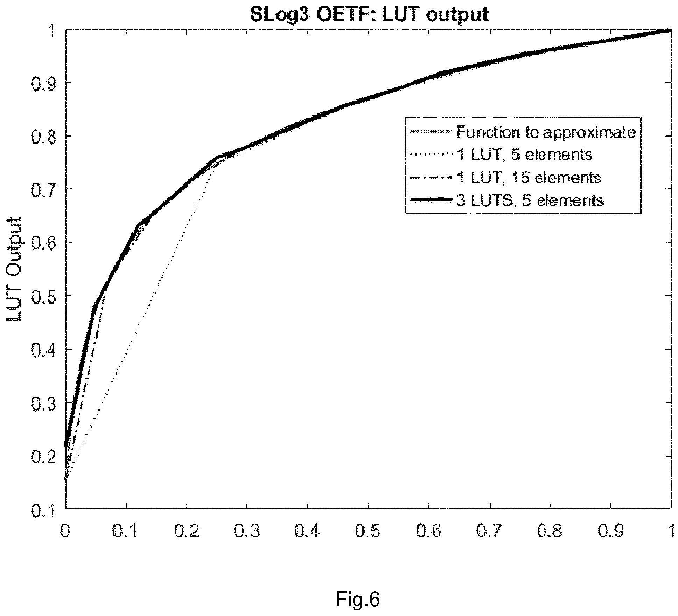

As an example, using the above method, the so-called Slog3 opto-electrical transfer function (OETF) is approximated with an iterative 5-bin LUT applied over 3 iterations. The accuracy of this approximation is shown in figure 6 (see curve "3 LUTS, 5 elements" compared to "1 LUT, 5 elements" or compared to "1 LUT, 15 elements"). This figure illustrates that an iterative 5-bin LUT applied over 3 iterations is at least as accurate than a single application of a 15-bin LUT.

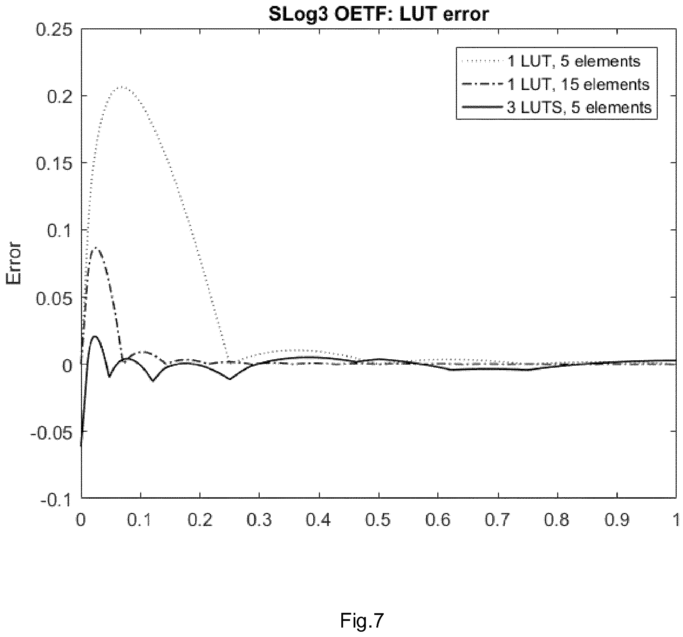

The error induced by this approximation is shown in figure 7. The mean absolute error of 3-iterated 5-bin LUT is 0.0038. For comparison, a conventional single-applied 15-bin LUT induces a higher mean absolute error of 0.0048.

Still in the first part of this embodiment, it may be noticed that, once a processing function $h(x)$ is given, there is generally no uniquely defined solution to determine a iterative function such that:

$$h(x) = (f \circ f)(x)$$

However, under certain circumstances it is possible to approximate an iterative function to an arguably simpler problem, namely to find an approximation to the iterative function $f$ such that when applied twice it approximates the processing function $h(x)$:

$$(f' \circ f')(x) \approx h(x)$$

where $f'$ is an approximation to $f$.

In a **second part of this embodiment,** a method of processing input values of data $x$ using a lookup-table (LUT) comprising applying iteratively this lookup-table over at least two iterations will be briefly described. This iterative lookup-table is notably defined as described in the first part of this embodiment, using usual computing means.

The method is notably implemented on a platform comprising at least one processor configured in a manner known per se to implement it. This platform can be for instance a mobile device as a tablet, a communication device as a smartphone, a game device, a laptop, a camera, a chip as an encoding chip, a server as a broadcast server or web server, a TV set or a Set-Top Box.

This processing method comprises at least two iterations : a first iteration in which the lookup-table is applied to the input values resulting in first output values and a second iteration in which the lookup-table is applied to the first output values resulting in second output values.

When the input value is different from an input value $x_1$, ..., $x_j$, ...., $x_k$ of the lookup table, an interpolation is performed between input values of the lookup table to output an output value that is interpolated between the corresponding output values of the lookup table. Such an interpolation is performed in an manner known per se in the field of lookup tables. Preferably, this interpolation is linear, saving then advantageously computing resources. Although interpolation is linear, the approximation of a processing function remains accurate due notably to the multiple iterations of the method.

Preferably, input values to process represents colors. For instance, input values to process are R,G,B values representing colors in a RGB color space. Preferably, as described in the first part of the embodiment above, the at least two iterations of the lookup table models a transfer function such as an Electro-Optical Transfer Function (EOTF), an Optical Electrical Transfer Function (OETF), a gamma function or a Slog / Slog2 / Slog3 function, or models a tone mapping or an inverse tone mapping function. By replacing these processing functions with multiple iterations of one LUT, a high accuracy approximation at a low computational cost may be obtained.

A processing function $h(x)$ that can be modeled by iterative application of a given LUT preferably adheres to the following characteristics.

First, the processing function $h(x)$ is preferably strictly monotonically increasing or strictly monotonically decreasing:

$$\frac{dh(x)}{dx} > 0 \quad \forall x \in [0,1]$$

or

$$\frac{dh(x)}{dx} < 0 \quad \forall x \in [0,1]$$

This means that the processing function $h(x)$ is preferably bijective, although may have inflection points.

Further, a given non-linear processing function $h(x)$ may have over its range of values a certain (varying) curvature. This curvature, along with the bin spacing and the assumed use of linear interpolation, has direct impact on the accuracy of a LUT. For example, for processing functions that have a smaller curvature (i.e., they are straighter), the accuracy of a corresponding LUT will be higher than for other functions.

Still further, when a highly non-linear target function $h(x)$ is decomposed into a double application of a same $f(x)$ such that $h(x) = (f°f)(x)$, then the curvature of $f(x)$ is less than that of $h(x)$ in the range $x \in [0,1]$. Thus, a LUT with a given number of bins approximating $f(x)$ will be of higher accuracy than a LUT with the same number of bins approximating directly $h(x)$. In practice, it is found that applying two $k$-bin LUTs in succession to approximate $(f°f)(x)$ is twice as accurate as approximating $h(x)$ directly with a single $2k$-bin LUT.

Note that when the processing function $h(x)$ to be approximated is linear, finding a solution $f(x)$ such that $h(x) = (f°f)$ $(x)$ is trivial. Assuming that $h(x) = kx,$ then $f(x)$ can be chosen to be $f(x) = \sqrt{k}\,x$ so that:

$$f°f(x) = \left(\sqrt{k}\right)^2 x = kx = h(x)$$

When $h(x) = x^\gamma$ (as for very usual so-called gamma functions), the iterative function can be $f(x) = x^{\sqrt{\gamma}}$ , so that:

$$f°f(x) = \left(x^{\sqrt{\gamma}}\right)^{\sqrt{\gamma}} = x^\gamma = h(x)$$

Preferably, both input and output of a processing function are bounded to a given range. Such a range may be bounded to be between 0 and 1, although any number of other ranges are possible:

$$x \in [0,1]$$

$$h(x) \in [0,1]$$

The method of processing input values of data is notably **advantageous,** because an approximation of a processing function $h(x)$ by multiple iteration of a given function $f(x)$ has been found generally more accurate than an approximation of this processing function $h(x)$ by different intermediate functions $f_1(x),...,f_r(x),...,f_Q(x)$ such that $h(x) = f_1(\ ...\ (f_r(\ ...\ (f_Q(x))\ ...\ ))\ ...\ )$.

Although the illustrative embodiments of the invention have been described herein with reference to the accompanying drawings, it is to be understood that the present invention is not limited to those precise embodiments, and that various changes and modifications may be effected therein by one of ordinary skill in the pertinent art without departing from the invention. All such changes and modifications are intended to be included within the scope of the present invention as set forth in the appended claims.

**Claims**

1. A computer implemented method of processing data, comprising:

   inputting values of color image data; and
   applying an identical look-up table to said input values of color image data over at least two iterations thereby obtaining output values of color image data, wherein the at least two iterations of the identical look-up table models a non-linear processing function, and

   wherein the at least two iterations comprise a first iteration in which said lookup-table, LUT, is applied to said input values resulting in first output values and in which said LUT is applied to said first output values resulting in second output values.

2. The method of claim 1, further comprising interpolating for said iterative application of said LUT.

3. The method of claim 2, wherein said interpolating for an application of said LUT is performed between input values of said LUT and between output values of said LUT.

4. The method of claim 3, wherein said interpolating is linear.

**5.** The method of any one of the previous claims, wherein said LUT is multidimensional.

**6.** The method of any one of the previous claims, wherein the at least two iterations of said LUT model the processing function which is non-linear and bijective.

**7.** The method of claim 6, wherein said processing function is chosen in the group composed of a transfer function, a tone mapping, and an inverse tone mapping function.

**8.** A device comprising at least one processor configured to implement the method according to any one of claims 1 to 7.

**9.** The device of claim 8 chosen in the group composed of a mobile device, a communication device, a game device, a laptop, a camera, a chip, a server, a TV set and a Set-Top Box.

**10.** A computable readable storage medium comprising stored instructions that when executed by a processor performs the method of any one of claims 1 to 7.

**Patentansprüche**

**1.** Computerimplementiertes Verfahren zur Datenverarbeitung, umfassend:

Eingeben von Werten von Farbbilddaten; und
Anwenden einer identischen Nachschlagetabelle auf die eingegebenen Werte von Farbbilddaten über mindestens zwei Iterationen, wodurch Ausgabewerte von Farbbilddaten erhalten werden, wobei die mindestens zwei Iterationen der identischen Nachschlagetabelle eine nicht-lineare Verarbeitungsfunktion modellieren, und wobei die mindestens zwei Iterationen eine erste Iteration umfassen, in der die Nachschlagetabelle (Lookup-Table, LUT) auf die Eingabewerte angewendet wird, was zu ersten Ausgabewerten führt, und in der die LUT auf die ersten Ausgabewerte angewendet wird, was zu zweiten Ausgabewerten führt.

**2.** Verfahren nach Anspruch 1, das des Weiteren ein Interpolieren für die iterative Anwendung der LUT umfasst.

**3.** Verfahren nach Anspruch 2, wobei das Interpolieren für eine Anwendung der LUT zwischen Eingabewerten der LUT und zwischen Ausgabewerten der LUT durchgeführt wird.

**4.** Verfahren nach Anspruch 3, wobei das Interpolieren linear ist.

**5.** Verfahren nach einem der vorangehenden Ansprüche, wobei die LUT mehrdimensional ist.

**6.** Verfahren nach einem der vorangehenden Ansprüche, wobei die mindestens zwei Iterationen der LUT die Verarbeitungsfunktion modellieren, die nicht-linear und bijektiv ist.

**7.** Verfahren nach Anspruch 6, wobei die Verarbeitungsfunktion ausgewählt wird aus der Gruppe bestehend aus einer Transferfunktion, einer Tonwertabbildung und einer inversen Tonwertabbildungsfunktion.

**8.** Vorrichtung, die mindestens einen Prozessor umfasst, der dazu eingerichtet ist, das Verfahren nach einem der Ansprüche 1 bis 7 zu implementieren.

**9.** Vorrichtung nach Anspruch 8, die ausgewählt ist aus der Gruppe bestehend aus einer mobilen Vorrichtung, einer Kommunikationsvorrichtung, einer Spiele-Vorrichtung, einem Laptop, einer Kamera, einem Chip, einem Server, einem Fernseher und einer Set-Top-Box.

**10.** Computerlesbares Speichermedium, das gespeicherte Instruktionen umfasst, die, wenn sie durch einen Prozessor ausgeführt werden, das Verfahren nach einem der Ansprüche 1 bis 7 durchführen.

**Revendications**

**1.** Procédé implémenté par ordinateur de traitement de données comprenant:

la saisie de valeurs de données d'images en couleur; et

l'application d'une table de recherche identique auxdites valeurs d'entrée des données d'images en couleur sur au moins deux itérations en obtenant ainsi des valeurs de sortie de données d'images en couleur, dans lequel les au moins deux itérations de la tacle de recherche identique modélisent une fonction de traitement non linéaire ; et dans lequel les au moins deux itérations comprennent une première itération dans laquelle ladite table de recherche, LUT, est appliquée auxdites valeurs d'entrée ce qui donne en résultat des premières valeurs de sortie et dans laquelle ladite LUT est appliquée auxdites premières valeurs de sortie ce qui donne en résultat des deuxièmes valeurs de sortie.

2. Procédé selon la revendication 1, comprenant en outre l'interpolation pour ladite application itérative de ladite LUT.

3. Procédé selon la revendication 2, dans lequel ladite interpolation pour une application de ladite LUT est effectuée entre des valeurs d'entrée de ladite LUT et entre des valeurs de sortie de ladite LUT.

4. Procédé selon la revendication 3, dans lequel ladite interpolation est linéaire.

5. Procédé selon une quelconque des revendications précédentes, dans lequel ladite LUT est multidimensionnelle.

6. Procédé selon une quelconque des revendications précédentes, dans lequel les au moins deux itérations de ladite LUT modélisent la fonction de traitement qui est non linéaire et bijective.

7. Procédé selon la revendication 6, dans lequel ladite fonction de traitement est choisie dans le groupe composé d'une fonction de transfert, un mappage tonal et une fonction de mappage tonal inverse.

8. Dispositif comprenant au moins un processeur configuré pour implémenter le procédé selon une quelconque des revendications 1 à 7.

9. Dispositif selon la revendication 8 choisi dans le groupe composé d'un dispositif mobile, un dispositif de communication, un dispositif de jeu, un ordinateur portable, une caméra, une puce, un serveur, un poste de télévision et un décodeur numérique.

10. Support de mémorisation lisible par ordinateur comprenant des instructions mémorisées qui, lorsqu'elles sont exécutées par uin processeur, mettent en œuvre le procédé d'une quelconque des revendications 1 à 7.

Fig.1

Fig.2

Fig.3

Fig.4

Fig.5

Fig.6

Fig.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012188229 A1